**Europäisches Patentamt**

**European Patent Office**

**Office européen des brevets**

(19)

(11) Veröffentlichungsnummer: **0 114 689**
**B1**

(12) **EUROPÄISCHE PATENTSCHRIFT**

(45) Veröffentlichungstag der Patentschrift:
24.08.88

(51) Int. Cl.⁴: **G 11 B 15/58,** G 11 B 15/60

(21) Anmeldenummer: **84100610.9**

(22) Anmeldetag: **20.01.84**

(54) **Magnetbandgerät.**

(30) Priorität: **25.01.83 DE 3302334**

(43) Veröffentlichungstag der Anmeldung:
**01.08.84 Patentblatt 84/31**

(45) Bekanntmachung des Hinweises auf die Patenterteilung:
**24.08.88 Patentblatt 88/34**

(84) Benannte Vertragsstaaten:
**DE FR GB**

(56) Entgegenhaltungen:
**DE - A - 2 822 296**
**FR - A - 2 246 015**
**FR - A - 2 429 474**
**US - A - 3 359 547**
**US - A - 3 430 833**
**US - A - 3 645 471**
**US - A - 3 823 895**
**US - A - 3 974 981**
**US - A - 4 331 306**

(73) Patentinhaber: **Siemens Aktiengesellschaft Berlin und München, Wittelsbacherplatz 2, D-8000 München 2 (DE)**

(72) Erfinder: **Gottwald, Winfried, Dipl.-Ing., Lilienstrasse 7, D-8033 Krailling (DE)**

ACTORUM AG

## Beschreibung

Die Erfindung bezieht sich auf ein Magnetbandgerät entsprechend dem Oberbegriff des Patentanspruchs 1.

Es sind allgemein Magnetbandgeräte bekannt, bei denen ein Magnetband ausgehend von einer Vorratsspule über eine dieser Vorratsspule zugeordnete Pufferkammer, vorbei an einem Magnetkopf und über eine einer Aufnahmespule zugeordneten weiteren Pufferkammer zur Aufnahmespule geführt wird. Der Antrieb des Magnetbands erfolgt unter Verwendung mindestens einer Antriebsrolle, die zwischen den Pufferkammern angeordnet ist. Unter Verwendung des Magnetkopfs werden auf das Magnetband im allgemeinen digitale Daten aufgezeichnet oder von diesem gelesen.

Ein derartiges Magnetbandgerät mit einem Aufbau gemäss dem Oberbegriff des Patentanspruches 1 ist aus US-A-3 359 547 bekannt. Es handelt sich dabei um ein Magnetbandgerät, bei dem als Bandantriebseinrichtung ein Paar von gegenläufig angetriebenen Andruckrollen vorgesehen ist, die zu beiden Seiten des Magnetkopfes angeordnet, jeweils alternativ betätigbar sind. Vorkammern sind koaxial zu den Pufferkammern so angeordnet, dass die Öffnungen je einer Pufferkammer und der zugeordneten Vorkammer einander gegenüberstehen. Diese Öffnungen der Kammern liegen etwa in Höhe des Magnetkopfes. Dadurch ergibt sich die Möglichkeit, das Magnetband bei einem schnellen Vor- bzw. Rücklauf ohne Zwischenschaltung der Puffer- bzw. Vorkammern am Magnetkopf vorbei direkt von einer Spule abzuwickeln und auf die andere Spule aufzuwickeln. Dazu sind im Bereich der Öffnungen der Puffer- bzw. Vorkammern Bandführungsrollen vorgesehen. Diese Art der Bandführung hat den Nachteil, dass die Schichtseite des Magnetbandes im Bereich der Bandantriebseinrichtung, aber auch im Bereich dieser Bandführungsrollen ständig mit diesen Bandführungsmitteln in Eingriff steht und daher in besonderer Weise mechanichem Abrieb ausgesetzt ist.

Aus der DE-PS 2 822 296 ist ein weiteres derartiges Magnetbandgerät bekannt. Bei diesem bekannten Magnetbandgerät ist die Aufnahmespule unterhalb der Vorratsspule angeordnet und die Pufferkammern befinden sich zu beiden Seiten der Vorratsspule und der Aufnahmespule. Die Öffnung der der Vorratsspule zugeordneten Pufferkammer weist nach oben und ist in der Nähe der Vorratsspule angeordnet, während die Öffnung der der Aufnahmespule zugeordneten Pufferkammer nach unten weist und in der Nähe der Aufnahmespule angeordnet ist. Die Antriebsrolle ist unmittelbar an der Öffnung der der Aufnahmespule zugeordneten Pufferkammer angeordnet und der Magnetkopf befindet sich seitlich ebenfalls in der Nähe dieser Pufferkammer und zwischen der Vorratsspule und der Aufnahmespule.

Das Magnetband wird unter Verwendung von Umlenkrollen über die Vorratsspule hinweg zu einer Pufferkammer geführt. Anschliessend wird das Magnetband wieder zurückgeführt und in der Nähe der anderen Pufferkammer am Magnetkopf und an der Antriebsrolle vorbei über die andere Pufferkammer zur Aufnahmespule geführt. Das Magnetband wird dabei an mehreren Stellen umgelenkt, was durch Umlenkrollen oder pneumatische Umlenkungen erfolgt. Das Magnetbandgerät weist einen kompakten Aufbau auf, enthält jedoch keine Vorkammern, die in der Nähe des Magnetkopfs und der Bandantriebsrolle üblicherweise angeordnet werden, um das Magnetband bei der Aufzeichnung oder Wiedergabe der Daten bei hohen Bandgeschwindigkeiten zusätzlich zu puffern. Falls das Magnetbandgerät für höhere Bandgeschwindigkeiten verwendbar sein soll und dann die Länge der Pufferkammern nicht ausreicht, muss, bei einer Beibehaltung des Grundaufbaus, d.h. der Anordnung der Antriebsrolle, des Magnetkopfs, der Vorratsspule und/oder der Aufnahmespule das Magnetbandgerät sowohl nach oben als auch nach unten verlängert werden, da die Enden der Pufferkammern oben bzw. unten angeordnet sind. In diesem Fall weist das Magnetbandgerät eine verhältnismässig grosse Bauhöhe auf. Falls die Pufferkammern nur in einer Richtung, beispielsweise nach oben, verlängert werden würden, wäre zusätzlich eine, hinsichtlich der von der Antriebsrolle zu beschleunigenden Längen des Magnetbands, nachteilige Änderung des Grundaufbaus erforderlich.

Weiterhin ist aus FR-A-2 429 474 ebenfalls ein Magnetbandgerät bekannt, bei dem Aufnahmespule und Abwickelspule untereinander angeordnet sind. Nach der bekannten technischen Lehre sind Pufferkammern vorgesehen, die gemeinsam vertikal auf einer Seite der Spule angeordnet sind. Sie können alternativ beide nach unten geöffnet, aber auch einander entgegengesetzt ausgerichtet sein. Der Magnetkopf ist mitsamt einer dazu benachbart angeordneten, einzigen Bandantriebsrolle am offenen Ende eines Schenkels einer der Pufferkammern zentral zwischen den Bandspulen und den Pufferkammern angeordnet. Der bekannte Bandlauf hat den Vorteil, dass keine Bandführungselemente an der Schichtseite des Magnetbandes angreifen, doch ist die Bandführung trotz des Verzichtes auf Vorkammern wegen einer Vielzahl von Umlenkpunkten relativ kompliziert und aufwendig.

Ein ähnliches Laufwerk ist auch aus US-A-4 331 306 bekannt. Hier sind allerdings zusätzlich Vorkammern im Bereich der Magnetbandantriebsrolle und des benachbarten Magnetkopfes vorgesehen.

Schliesslich ist aus US-A-3 823 895 das Laufwerk eines Magnetbandgerätes bekannt, bei dem die beiden Bandspulen horizontal nebeneinander angeordnet sind. Je eine Pufferkammer ist, in vertikaler Lage und nach oben geöffnet, unterhalb der Bandspulen vorgesehen. Den beiden Bandspulen dicht benachbart, liegt zwischen den Pufferkammern der Magnetkopf. Zu beiden Seiten des Magnetkopfes sind eine einzige, umsteuerbare Bandantriebsrolle bzw. ein pneumatischer Umlenkpfosten jeweils am Ende eines Schenkels von V-förmigen Vorkammern angeordnet, die bei im wesentlichen horizontaler Lage zueinander versetzt sind und mit ihren Öffnungen in Richtung der Öffnungen der jeweils zugeordneten Pufferkammer weisen.

Der bekannte Bandlauf hat wegen der Einfachheit der Bandführung bei einer Minimalzahl von Umlenkpunkten unbestreitbare Vorteile, er eignet sich auch aufgrund der Anordnung der Bandspulen in bezug auf den Bandantrieb und die Pufferkammern insbesondere zum automatischen Einfädeln des Magnetbandes. Nachteilig ist aber die ungünstige Raumausnutzung. Da beide Bandspulen nebeneinander angeordnet sind, wird die Stellfläche des Magnetbandgerätes wegen seiner breiten Abmessung relativ gross. Andererseits ist bei einer vorgegebenen Bauhöhe auch die vertikale Raumausnutzung in bezug auf die Länge der Pufferkammern ungünstig, da die Bandwickel erheblichen Platz wegnehmen.

Zusammenfassend ist festzustellen, dass eine Mehrzahl von Lösungen für Laufwerke von Magnetbandgeräten bekannt ist, die in Teilaspekten durchaus befriedigte Eigenschaften aufweisen, jedoch in der Gesamtheit dieser Eigenschaften noch zu wünschen übrig lassen.

Der vorliegenden Erfindung liegt daher die Aufgabe zugrunde, ein Magnetbandgerät der eingangs genannten Art zu schaffen, dessen Aufbau des Laufwerkes einerseits insbesondere im Hinblick auf die benötigte Gerätestellfläche kompakt ist, andererseits einen möglichst einfachen, gut regelbaren Bandlauf bei weitgehender Schonung des bewegten Magnetbandes ermöglicht und schliesslich so ausgebildet ist, dass damit Magnetbandgeräte mit verschiedenen Bandgeschwindigkeiten ohne grossen Fertigungsaufwand kostengünstig herstellbar sind.

Erfindungsgemäss wird diese Aufgabe bei einem Magnetbandgerät der eingangs genannten Art durch die im Kennzeichen des Patentanspruches 1 angegebenen Merkmale gelöst.

Das Magnetbandgerät gemäss der Erfindung hat den Vorteil, dass es, trotz der Verwendung von Vorkammern sehr kompakt aufgebaut werden kann und auf einer standardisierten Montageplatte mit einer Breite von 48,26 cm untergebracht werden kann. Weiterhin hat das Magnetbandgerät den Vorteil, dass es einen einfachen und übersichtlichen Aufbau und eine geringe Anzahl von Umlenkungen aufweist. Die Anschlüsse für die Erzeugung des Unterdrucks in den Pufferkammern befinden sich beide an der Oberseite des Geräts, so dass die Zuführung von entsprechenden Schläuchen oder Rohren einfach ausgebildet sein kann.

Eine vorteilhafte Anordnung der Vorkammern wird dadurch erreicht, dass deren Öffnungen zu den jeweiligen Pufferkammern hin angeordnet sind. Die Vorkammern werden zweckmässigerweise so angeordnet, dass sie mit einander gegenüberliegenden Öffnungen unmittelbar benachbart sind. Die Antriebsrolle wird an einem Ende eines Schenkels einer Vorkammer angeordnet. Der Magnetkopf wird zwischen der Antriebsrolle und einem an einem Schenkel der anderen Vorkammer angeordneten pneumatischen Umlenkpfosten angeordnet.

Das Magnetbandgerät ermöglicht infolge seines Aufbaus bei der Verwendung von Führungen mittels Druckluft ein selbsttätiges Einfädeln des Magnetbands.

Die Enden der Pufferkammern können auch abgewinkelt ausgebildet sein, so dass die Pufferkammern ohne Veränderung der Bauhöhe des Magnetbandgeräts verlängert werden können.

Ein Ausführungsbeispiel des Magnetbandgeräts gemäss der Erfindung wird im folgenden anhand einer Zeichnung beschrieben.

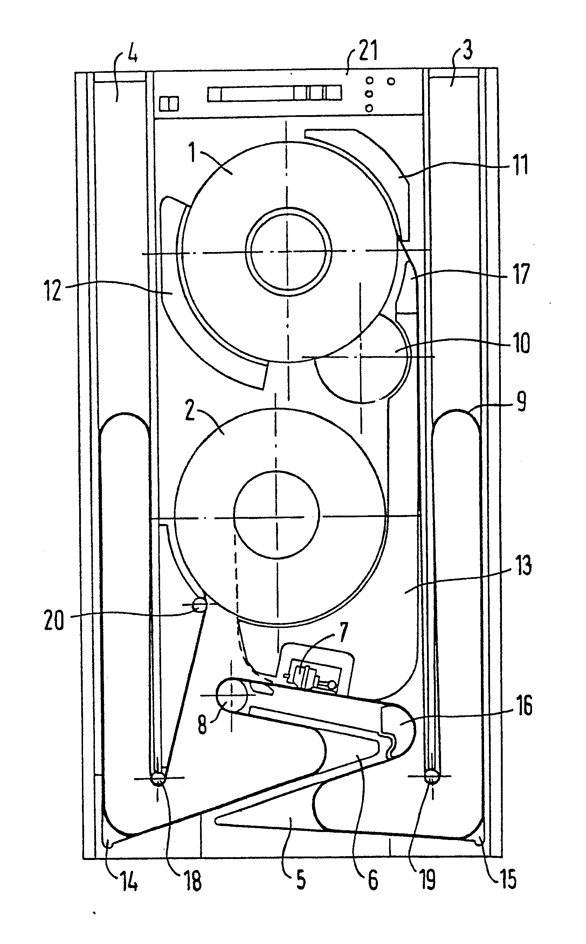

Die Figur zeigt eine Frontansicht des Laufwerks des Magnetbandgeräts. Das Magnetbandgerät ist für ein selbsttätiges Einfädeln des Magnetbandes ausgebildet. Es weist eine Vorratsspule 1, eine Aufnahmespule 2 und zwei Pufferkammern 3 und 4 auf. Weiterhin enthält das Magnetbandgerät zwei Vorkammern 5 und 6, einen Magnetkopf 7 und eine Antriebsrolle 8.

Nach dem Einlegen der mit einem Magnetband 9 versehenen Vorratsspule 1 wird das Magnetband 9 selbsttätig zur Aufnahmespule 2 geführt und anschliessend unter Verwendung von Unterdruck in die Pufferkammern 3 und 4 sowie in die Vorkammern 5 und 6 hineingesogen. Dieser Vorgang wird als selbsttätiges Einfädeln oder selbsttätiges Laden bezeichnet. Falls die Vorratsspule 1 einen Kassettenring aufweist, wird dieser unter Verwendung einer mit einem Mitnehmerstift versehenen Scheibe 10 geöffnet und an die Laderingaufnahme 11 und die Andruckflächen 12 angelegt. Ein der Vorratsspule 1 zugeordneter Antriebsmotor wickelt nun das Magnetband 9 ab. Das Magnetband 9 wird unter Verwendung von Druckluft an einer keulenförmigen Führung 13 entlang und an dem Magnetkopf 7 vorbei zur Aufnahmespule 2 geführt, wie es im Bereich der Aufnahmespule 2 gestrichelt dargestellt ist. Die Aufnahmespule 2 wird mit Unterdruck versorgt und gleichzeitig gedreht, so dass sie das Ende des Magnetbands 9 fangen kann.

Nach dem Abwickeln eines vorgegebenen Teils des Magnetbands 9 von der Vorratsspule 1 wird die Drehrichtung der Aufnahmespule 2 umgedreht, so dass das Magnetband 9 teilweise wieder abgewickelt wird. Gleichzeitig wird in den Vorkammern 5 und 6 sowie in den Pufferkammern 3 und 4 ein Unterdruck erzeugt, so dass das Magnetband 9 in diese hineingesogen wird und die in der Figur dargestellte Stellung einnimmt, in der sowohl in den Pufferkammern 3 und 4 als auch in den Vorkammern 5 und 6 Schlaufen gebildet werden. Die Antriebsrolle 8 wird vom Magnetband 9 umschlungen und bei einer Bewegung der Antriebsrolle 8 unter Verwendung eines Antriebsmotors kann das Magnetband 9 in beiden Richtungen transportiert werden. Die Umlenkung des Magnetbands 9 erfolgt an den unteren Ecken 14 und 15 durch Unterdruck und an der Öffnung der Vorkammer 5 sowie in der Nähe der Vorratsspule 1 durch pneumatische Umlenkpfosten 16 bzw. 17. An den Öffnungen der Pufferkammern 3 und 4, sowie in der Nähe der Aufnahmespule 2 sind weitere als Rollen ausgebildete mechanische Umlenkpfosten 18 bis 20 vorgesehen.

Bei de blockweisen Aufzeichnung bzw. Wiedergabe von Daten auf bzw. vom Magnetband 9 ist es notwendig, das Magnetband 9 in den verhältnismässig kurzen Lücken zwischen den benachbarten Blöcken auf seine Nenngeschwindigkeit zu beschleunigen oder wieder abzubremsen. Dazu ist ein trägheitsarmer Bandantrieb mit hohem Beschleunigungsvermögen notwendig. Da jedoch die Vorratsspule 1 und/oder die Aufnahmespule 2 mit den zugeordneten Antriebsmotoren eine sehr grosse Trägheit besitzen, ist es notwendig, zwischen dem Bandantrieb und jeder Bandspule je eine Pufferkammer 3 bzw. 4 so anzuordnen, dass eine Entkopplung des Bandantriebes von den Antrieben der Bandspulen durch Puffern von Magnetband ereicht wird. Die Vorkammern 5 und 6 dienen der Verminderung der vom Bandantrieb zu beschleunigenden Bandmasse, um damit das Start-Stop-Verhalten des Bandantriebs zu verbessern.

Die Öffnungen der Pufferkammern 3 und 4 sind nach unten gerichtet, und die Vorkammern 5 und 6, die V-förmig ausgebildet sind, sind zu den jeweiligen Pufferkammern 3 und 4 hin geöffnet. Auf diese Weise ergibt sich eine einfache Bandführung. Die Länge der Pufferkammern 3 und 4 kann verändert werden, ohne dass sich der Grundaufbau verändern muss. Auf diese Weise kann das Magnetbandgerät beispielsweise sehr einfach an unterschiedliche Bandgeschwindigkeiten angepasst werden.

Eine einfache Verlängerung der Pufferkammern 3 und 4 kann bei gleicher Bauhöhe auch dadurch erreicht werden, dass die Enden zur Vorratsspule 1 hin abgewinkelt werden.

Für den konstruktiven Aufbau hat die beschriebene Anordnung der Pufferkammern 3 und 4 den Vorteil, dass die Anschlüsse zur Erzeugung des Unterdrucks beide am oberen Ende des Magnetbandgeräts vorgesehen sind.

Das Magnetbandgerät muss nicht unbedingt zum selbsttätigen Einfädeln ausgebildet sein. In diesem Fall wird das Magnetband 9 von Hand von der Vorratsspule 1 über den Magnetkopf 7 zur Aufnahmespule 2 geführt und dort durch einige Umdrehungen aufgewickelt. Anschliessend wird wieder ein Teil des Magnetbands 9 von der Vorratsspule 1 und/oder der Aufnahmespule 2 abgewickelt und durch die Wirkung des Unterdrucks in den Pufferkammern 3 und 4 sowie in den Pufferkammern 5 und 6 wird das Magnetband 9 in die dargestellte Position gebracht. Anschliessend wird das Magnetband 9, ebenso wie beim selbsttätigen Einfädeln soweit auf die Aufnahmespule 2 aufgewickelt, bis eine Bandanfangsmarke erkannt wird. Anschliessend kann mit der Aufnahme oder Wiedergabe von Daten unter Verwendung des Magnetkopfs 7 begonnen werden.

**Patentansprüche**

1. Magnetbandgerät, bei dem ein Magnetband von einer Vorratsspule (1) zu einer unterhalb dieser angeordneten Aufnahmespule (2) transportiert wird, bei dem zu beiden Seiten der Vorratsspule bzw. der Aufnahmespule einen Unterdruck aufweisende Pufferkammern (3, 4) angeordnet sind, bei dem ein Magnetband ausgehend von der Vorratsspule über die Pufferkammern der Aufnahmespule zugeführt wird und bei dem im Bandlauf zwischen den beiden Pufferkammern ein Magnetkopf (7) sowie Bandantriebseinrichtung (8) und dazu benachbart Vorkammern (5, 6) vorgesehen sind, dadurch gekennzeichnet, dass die beiden Pufferkammern (3, 4) die gesamte Höhe des Magnetbandgerätes einnehmen und nach unten geöffnet sind, dass unterhalb der Aufnahmespule (2) der Magnetkopf (7) angeordnet ist und unterhalb dieses Magnetkopfes die Vorkammern (5, 6), im wesentlichen horizontal ausgerichtet, mit V-förmigen ausgebildeten Schenkeln zueinander versetzt und mit ihren Öffnungen jeweils in Richtung der Öffnung der zugeordneten Pufferkammer weisend, angeordnet sind, dass am Ende eines Schenkels der einen Vorkammer (6), dem Magnetkopf benachbart, als Bandantriebseinrichtung eine einzige, in ihrer Drehrichtung umsteuerbare Bandantriebsrolle (8) vorgesehen ist und dass auf der gegenüberliegenden Seite des Magnetkopfes am Ende eines Schenkels der anderen Vorkammer (5) ein pneumatischer Umlenkpfosten (16) angeordnet ist.

2. Magnetbandgerät nach Anspruch 1, dadurch gekennzeichnet, dass Einrichtungen (10 bis 13) zum selbsttätigen Einfädeln des Magnetbands (9) vorgesehen sind.

3. Magnetbandgerät nach einem der Ansprüche 1 oder 2, dadurch gekennzeichnet, dass die Pufferkammern (3, 4) geradlinig ausgebildet sind.

4. Magnetbandgerät nach einem der Ansprüche 1 oder 2, dadurch gekennzeichnet, dass die Pufferkammern (3, 4) an ihren Enden in Richtung zur Vorratsspule (1) abgewinkelt sind.

**Claims**

1. A magnetic tape recorder, in which magnetic tape is transported from a supply reel (1) to a take-up reel (2) arranged underneath the latter, in which buffer chambers (3, 4), having a reduced pressure, are arranged on either side of the supply reel and of the take-up reel, respectively, in which a magnetic tape leaving the supply reel is fed via the buffer chambers to the take-up reel and in which a magnetic head (7) as well as tape drive mechanism (8) and antechambers (5, 6) arranged adjacent thereto are provided in the tape run between the two buffer chambers, characterised in that the two buffer chambers (3, 4) take up the entire height of the magnetic tape recorder and are open downwards, in that the magnetic head (7) is arranged underneath the take-up reel (2) and the antechambers (5, 6), essentially aligned horizontally, offset with respect to each other with legs of V-shaped design and with openings each pointing in the direction of the opening of the assigned buffer chamber, are arranged underneath this magnetic head, in that a single tape drive capstan (8), reversible in its direction of rotation, is provided at the end of a leg of the one antechamber (6), alongside the magnetic head, and in that on the opposite side of the magnetic head, at the end of a leg of the other antechamber (5), there is arranged a pneumatic deflection peg (16).

2. A magnetic tape recorder according to Claim 1, characterised in that mechanisms (10–13) for automatic threading of the magnetic tape (9) are provided.

3. A magnetic tape recorder according to one of Claims 1 or 2, characterised in that the buffer chambers (3, 4) are of straight design.

4. A magnetic tape recorder according to one of Claims 1 or 2, characterised in that the buffer chambers (3, 4) are angled-off at their ends in the direction of the supply reel (1).

## Revendications

1. Appareil à bande magnétique, dans lequel une bande magnétique est transportée d'une bobine débitrice (1) jusqu'à une bobine réceptrice (2) placée sous elle, dans lequel des chambres tampons (3, 4), présentant une dépression, sont disposées des deux côtés des bobines débitrice et réceptrice, dans lequel la bande magnétique est amenée à partir de la bobine débitrice jusqu'à la bobine réceptrice en passant par les chambres tampons et dans lequel une tête magnétique (7) ainsi qu'un dispositif d'entraînement de la bande sont prévus sur le trajet de la bande entre les deux chambres tampons, avec prévision de préchambres (5, 6) à proximité d'eux, caractérisé en ce que les deux chambres tampons (3, 4) occupent toute la hauteur de l'appareil à bande magnétique et sont ouvertes en bas, que la tête magnétique (7) est placée sous la bobine réceptrice (2) et les préchambres (5, 6), orientées essentiellement dans le sens horizontal, sont disposées au dessous de cette tête magnétique, les préchambres présentant des côtés en V, étant décalées l'une par rapport à l'autre et étant dirigées avec leur ouverture vers l'ouverture de la chambre tampon coordonnée, qu'un seul cabestan (8), dont le sens de rotation est réversible, est prévu en tant que dispositif d'entraînement de la bande à l'extrémité d'un côté d'une préchambre (6), à proximité de la tête magnétique, et qu'un renvoi pneumatique (16) est disposé de l'autre côté de la tête magnétique, à l'extrémité d'un côté de l'autre préchambre (5).

2. Appareil selon la revendication 1, caractérisé en ce que des dispositifs (10 à 13) sont prévus pour l'insertion automatique de la bande magnétique (9).

3. Appareil selon la revendication 1 ou 2, caractérisé en ce que les chambres tampons (3, 4) sont rectilignes.

4. Appareil selon la revendication 1 ou 2, caractérisé en ce que les chambres tampons (3, 4) sont coudées à leurs extrémités, en direction de la bobine débitrice (1).